# EUROPEAN PATENT APPLICATION

(11) **EP 4 826 260 A1**
(43) Date of publication of application: **21.10.2026**
(21) Application number: 26171882.9
(22) Date of filing: 13.04.2026
(51) Int. Cl.: F16B 1/00

(54) **QUICK-FIT FASTENER FOR TWO CONSTRUCTION PARTS AS WELL AS ASSEMBLY WITH SUCH A QUICK-FIT FASTENER**

(30) Priority: 16.04.2025 DE 102025114856
(71) Applicant: TE Connectivity Solutions GmbH, 8200 Schaffhausen (CH)
(72) Inventor: CHRITZ, Gunther, 8200 Schaffhausen (CH)
(74) Representative: Grünecker Patent- und Rechtsanwälte PartG mbB

(57) **Abstract**

The present invention relates to a quick-fit fastener (2) for mechanically interconnecting two, mutually spaced apart construction parts, wherein the quick-fit fastener (2) comprises a first fastener component (6') and a second fastener component (6"), wherein the first fastener component (6') is provided for arrangement at a first construction part (4') of the two construction parts and the second fastener component (6") is provided for arrangement at a second construction part (4") of the two construction parts, wherein the first fastener component (6') and the second fastener component (6") are configured mutually latchable along a connection direction (22). With the help of the quick-fit fastener (2), the construction parts can be assembled to a larger structure in an easy manner. Moreover, the present invention relates to an assembly (1) with such a quick-fit fastener (2) and two construction parts (4', 4").

## Description

The present invention relates to a quick-fit fastener for mechanically connecting two construction parts. Furthermore, the present invention relates to an assembly with such a quick-fit fastener and two construction parts.

In many fields of technology, relatively long or flat construction elements are used. If these are, for example, construction elements made of injection-molded plastic, warping caused by cooling may severely impair their dimensional accuracy. If one external dimension of the construction element exceeds its remaining external dimensions by several orders of magnitude, not only the manufacturing process but also further processing, as well as transport and installation, become extremely difficult.

The present invention is therefore based on the objective of creating means to simplify the manufacturing, transport, and installation processes of construction elements and to increase their dimensional accuracy.

This object is addressed by a quick-fit fastener for mechanically connecting two, mutually spaced apart construction parts, wherein the quick-fit fastener included a first fastener component and a second fastener component, wherein the first fastener component is provided for arrangement at a first construction part of the two construction parts and the second fastener component is provided for arrangement at a second construction part of the two construction parts, wherein the first fastener component and the second fastener component are configured to be mutually lachtable along a connection direction.

Thanks to the quick-fit fastener, the construction parts may be easily assembled into a larger construction element. In other words, the quick-fit fastener enables construction of a comparatively long or flat construction element in multiple parts, divided into the individual construction parts. The individual construction parts are easier to handle during manufacturing, transport, and installation than an integral or one-piece construction element.

The connection direction, along which the latching occurs, may be freely selected. In particular, the connection direction may be selected such that the latching of the latching components may be integrated as seamlessly as possible into the remaining manufacturing steps. In other words, dividing into multiple construction parts neither hinders nor complicates the manufacturing process. This is explained in more detail below.

Furthermore, the division of the construction element into construction parts made possible by the quick-fit fastener contributes to greater dimensional accuracy. This is because, particularly in plastic injection molding, smaller construction parts generally cool more evenly than an integral construction element. This results in fewer internal stresses, which are typically responsible for material warping.

Moreover, the individual construction parts each require smaller molds, in which temperature control as well as the injection and holding pressure processes may be controlled significantly better. The improved process control, thus achieved, ensures more uniform material distribution and reduces the risk of dimensional deviations. Another advantage lies in the shorter flow paths of the smaller molds. This prevents the plastic melt from having to flow long distances, which would otherwise accentuate flow lines and one-dimensional material orientations more pronouncedly and thus lead to warpage.

Similarly, an arrangement including an inventive quick-fit fastener, a first construction part, and a second construction part spaced apart from the first construction part addresses the above objective, wherein the first fastener component is located on the first construction part and the second fastener component is located on the second construction part, and wherein the first construction part is mechanically connectable to the second construction part via the quick-fit fastener.

The invention may be further improved by the following embodiments, each of which is advantageous in itself and may be combined with one another as desired.

According to a first potential embodiment, the first fastener component may be formed integrally with the first construction part. Similarly, the second fastener component may be formed integrally with the second construction part. In other words, the fastener components may form a monolithic unit with the respective construction part. This simplifies the handling of the arrangement according to the invention in particular, since the fastener components are not separate from the construction parts. Alternatively, the fastener components may be glued, welded, or otherwise secured to the respective construction part. Thus, materials may be selected for the fastener components and construction parts, respectively, with which a one-piece configuration would not be feasible.

Furthermore, the first fastener component and the second fastener component may be configured mutually lachtable in a linear manner along the connection direction. In particular, the fastener components may be latched with one another without any pivoting or tilting motion, in which the fastener components - and thus also the construction parts - would have to traverse large volumes. Accordingly, the latching may take place within a comparatively narrow working space and requires little space during the manufacturing process.

Alternatively, the latching may also occur during a pivoting or tilting motion if sufficient working space is available and/or the workflow requires it.

According to a further potential embodiment, the first fastener component and the second fastener component may be displaceable relative to one another along a displacement direction while in the latched state.

Due to the displaceability of the two fastener components, compensatory movements within the assembly are possible even after latching, so that any dimensional tolerances of the construction parts may be better compensated for as needed than with rigid mechanical connections. In particular, the dimensional inaccuracies of the individual construction parts do not add up, resulting in smaller overall dimensional deviations than with rigidly connected construction parts or one-piece construction elements.

According to a further potential embodiment, the first fastener component may have a first center hole and the second fastener component a second center hole, wherein the first center hole and the second center hole are aligned transversely, in particular, perpendicular to the displacement direction, in the latched state. The center holes may have the same inner diameter and extend through the respective fastener component as a through-hole.

Optionally, the quick-fit fastener may have a zero position in which the fastener components can be displaced by the same distance in both the displacement direction and against it. In other words, the zero position is equidistant from both endpoints of the displacement. This zero position can be defined advantageously by means of the center holes. For this purpose, the center holes are arranged on the respective fastener components such that the center holes align perpendicular to the displacement direction when the quick-fit fastener is in its zero position.

Optionally, the quick-fit fastener may include a centering pin whose outer diameter precisely matches the aforementioned inner diameter of the center holes. The centering pin may be a separate component or may be pivotally attached to the quick-fit fastener via a film hinge. With the help of the centering pin, the quick-fit fastener may be latched in its zero position, for example, for the duration of assembly or transport of the assembly. To do this, the centering pin is inserted into the aligned center holes and prevents mutual relative displacement of the fastener components. As soon as the ability to move the fastener components is required again, the centering pin may be withdrawn from at least one center hole.

According to a further potential embodiment, the first fastener component may have a first insertion bevel that runs obliquely to the connection direction and/or the second fastener component may have a second insertion bevel that runs obliquely to the connection direction. Optionally, the first insertion bevel may be aligned parallel to the second insertion bevel. In particular, the insertion bevels may each be inclined by at most 60° relative to the connection direction. The insertion bevels simplify the latching of the fastener components.

To achieve a compact and space-saving embodiment of the quick-fit fastener, the first fastener component may have a first flat side that forms a first outer surface of the quick-fit fastener in the latched state. Alternatively or additionally, the second fastener component may have a second flat side that forms a second outer surface of the quick-fit fastener, facing away from the first outer surface, in the latched state. Optionally, the flat sides are aligned parallel to one another in the latched state. The first outer surface may, for example, constitute an upper surface of the quick-fit fastener, while the second outer surface may constitute a lower surface of the quick-fit fastener (or *vice versa*).

Optionally, the assembly may include an additional auxiliary part in addition to the first construction part and the second construction part. To efficiently utilize the installation space, the additional auxiliary part may be positioned between the first and second construction parts. In particular, it is advantageous to attach the additional auxiliary part to the quick-fit fastener. For this purpose, the quick-fit fastener may include at least one caulking dome that protrudes from the first flat side or the second flat side.

The at least one caulking dome is configured to penetrate a mounting opening in the additional auxiliary part and subsequently be plastically deformed under the influence of thermal and/or mechanical energy. This results in a rivet-like connection, with which the additional auxiliary part of the assembly may be attached to the quick-fit fastener. As an alternative to a caulking dome, other types of mounting elements, such as a Board-Lock, may also be used.

According to a further potential embodiment, the connection direction may run parallel to the displacement direction. Furthermore, the connection direction and the displacement direction may be coplanar with the aforementioned flat sides. Thus, the quick-fit fastener remains as flat as possible and occupies only a comparatively small height. For example, a distance between the flat sides, represented by the height, does not exceed 5 mm, in particular 4 mm, and preferably 3.5 mm.

Alternatively, the connection direction may run transversely, in particular perpendicular to the displacement direction. In other words, the connection direction and the displacement direction may form an angle of up to 90° with respect to one another. This has the advantage that the aforementioned compensatory movements may not, or at least with lower probability, accidentally release the latch.

According to a further potential embodiment, the first fastener component may include a first latching element and the second fastener component a second latching element complementary to the first latching element. Furthermore, the first latching element and the second latching element may have substantially equal widths measured perpendicular to the displacement direction. Conversely, the first latching element and the second latching element may have different lengths when measured parallel to the displacement direction. This dimensional relationship results in mutual complementarity and allows the latching as well as the subsequent movability of the fastener components to be implemented in a simple manner.

If the aforementioned caulking dome is provided on the first fastener component, it is optionally arranged on the opposite side of the first latching element. This positioning of the caulking dome ensures that neither it nor the additional auxiliary part hinders the latching process of the first fastener component with the second fastener component. In particular, this allows the fastener components to be latched after the additional auxiliary part has already been attached to the quick-fit fastener. Similarly, the caulking dome is arranged on the opposite side of the second latching element if it is provided on the second fastener component.

The additional auxiliary part may also be attached, of course, to the quick-fit fastener after the fastener components have been latched. In this respect, the quick-fit fastener according to the invention provides flexibility, which contributes to the seamless integration of all manufacturing steps of the arrangement according to the invention.

According to a further potential embodiment, the first latching element may be configured as a latching arm, while the second latching element is configured as a latching receptacle for the latching arm. Conversely, the second latching element may also be configured as a latching arm, while the first latching element serves as the latching receptacle. In this case, the latching receptacle may be longer - measured parallel to the displacement direction - than the latching arm, in particular, at least twice as long. This allows for sufficient displacement of the latching arm within the latching receptacle. Optionally, the latching arm may have a latching projection that extends transversely, in particular perpendicular to the connection direction. In the latched state, the latching projection may engage in a form-fitting manner with an undercut in or on the latching receptacle.

Optionally, the first latching element and/or the second latching element may be rounded at least in sections. In particular, an outer surface of the latching arm and/or an inner surface of the latching receptacle may be provided with a rounding. During latching, the smallest possible surfaces then slide against one another, thereby reducing frictional resistance and making the latching process smoother.

Another way to make the latching smoother is to design the area surrounding the latching elements to be as flexible as possible. For this purpose, recesses may be provided in the fastener components. The center holes mentioned above may serve as such recesses. If necessary, the fastener components may have additional recesses.

According to a further potential embodiment, the first fastener component may have at least one first stop spaced apart from the first latching element. Furthermore, the second fastener component may include at least one second stop spaced apart from the second latching element. Due to their mutual spacing, the latching elements may be configured to be as flexible as possible to ensure smooth engagement, while the stops may be configured to be rigid and dimensionally stable.

In the latched state, the at least one first stop and the at least one second stop may be aligned in the displacement direction. Furthermore, the at least one first stop and the at least one second stop may define one of the aforementioned endpoints of the displacement. Thus, the stops prevent excessive mechanical stress on the latching elements at least on one side. To prevent excessive mechanical stress on the latching elements on both sides, additional stops are to be provided.

For reasons of stability and redundancy, the first fastener component may include a third latching element, while the second fastener component may include a fourth latching element complementary to the third latching element. In this case, the third latching element complements the first latching element of the first fastener component, and the fourth latching element complements the second latching element of the second fastener component. For example, the third latching element may be positioned perpendicular to the displacement direction opposite the first latching element. Similarly, the fourth latching element may be positioned perpendicular to the displacement direction opposite the second latching element.

Alternatively or additionally, the first fastener component may include a fifth latching element that is aligned with the first latching element in the displacement direction. Accordingly, the second fastener component may include a sixth latching element complementary to the fifth latching element, which is aligned with the second latching element in the displacement direction.

The recesses mentioned above, which make the area surrounding the latching elements flexible, may each be arranged between two adjacent latching elements of the same fastener component, such that they exert their effect on the two adjacent latching elements simultaneously.

Also for reasons of stability and redundancy, the assembly may include multiple quick-fit fasteners with which the construction parts may be connected. In this case, it is advantageous to arrange the respective first fastener components on the same construction part. Accordingly, the respective second fastener components are arranged on the other construction part.

According to a further potential embodiment, the first fastener component and the second fastener component may be structurally identical to one another, in particular identical in design. For this purpose, the first fastener component may have at least one latching arm and one latching receptacle, while the second fastener component may have at least one latch receptacle and one latch arm. In other words, the fastener components may be configured to be hermaphroditic. On the one hand, this simplifies manufacturing, as both fastener components may be produced using the same mold. In the case of plastic injection-molded parts, for example, the same mold may be used for both fastener components. Furthermore, no distinction needs to be made between the fastener components, thereby reducing the effort required for storing spare parts.

The assembly according to the invention may be a multi-part construction element, for example from the field of automotive engineering. The construction parts of the assembly and thus the entire construction element represented by the assembly may serve different purposes. For example, it may be a support structure for connections of a battery system. Accordingly, the quick-fit fastener of the invention may be used in such a support structure for connections of a battery system.

The aforementioned additional auxiliary part may be, for example, a battery connection that is attached to the support structure in the area of the quick-fit fastener. In addition to the auxiliary part, further battery terminals may be attached to the support structure at a distance from the quick-fit fastener.

The invention is described in more detail below with reference to the drawings, based on several embodiments whose various features may be freely combined with one another in accordance with the above remarks.

In the figures:
Fig. 1 is a schematic perspective view of an assembly according to an exemplary embodiment;
Fig. 2 is a schematic perspective exploded view of a quick-fit fastener according to an exemplary embodiment;
Fig. 3 is a further schematic perspective exploded view of the quick-fit fastener of Fig. 2;
Fig. 4 is a schematic perspective view of the quick-fit fastener according to a further exemplary embodiment;
Fig. 5 is a schematic perspective exploded view of the quick-fit fastener of Fig. 4;
Fig. 6 is a schematic perspective sectional view of the quick-fit fastener of Fig. 4;
Fig. 7 is a further schematic perspective exploded view of the quick-fit fastener of Fig. 4;
Fig. 8 is a further schematic perspective view of the quick-fit fastener of Fig. 4;
Fig. 9 is a schematic perspective view of the quick-fit fastener according to a further exemplary embodiment;
Fig. 10 is a schematic perspective exploded view of the quick-fit fastener of Fig. 9;
Fig. 11 is a schematic perspective view of the quick-fit fastener according to a further exemplary embodiment;
Fig. 12 is a schematic perspective exploded view of the quick-fit fastener of Fig. 11;
Fig. 13 is a further schematic perspective exploded view of the quick-fit fastener of Fig. 11;
Fig. 14 is a schematic perspective exploded view of the quick-fit fastener according to a further exemplary embodiment; and
Fig. 15 is a schematic perspective exploded view of the quick-fit fastener according to a further exemplary embodiment.

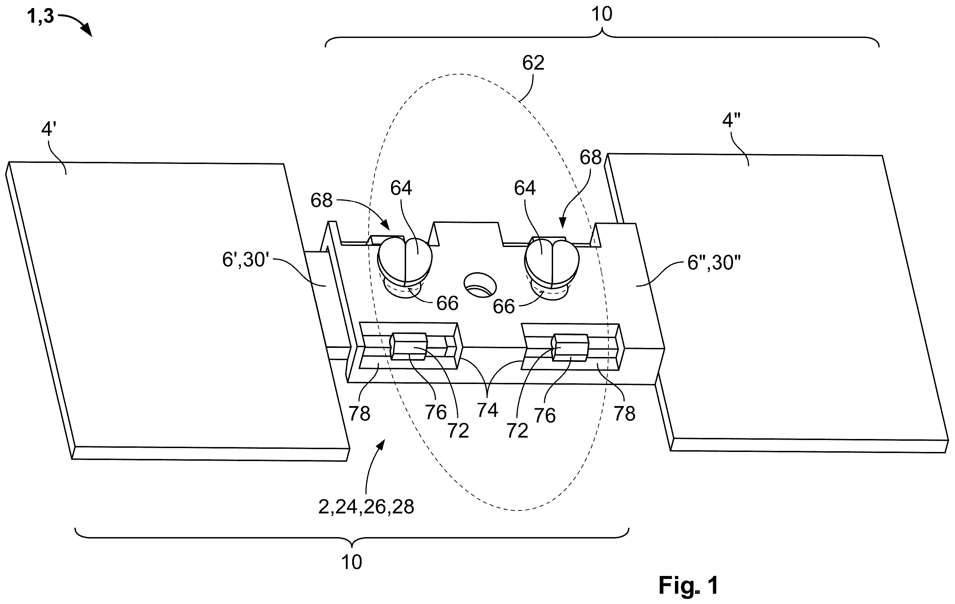

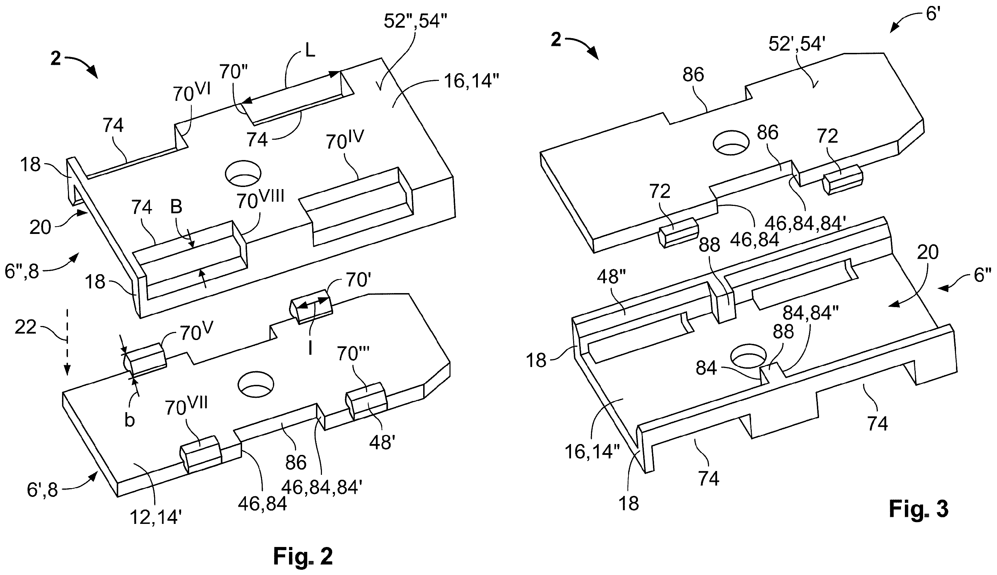

First, the schematic structure of an assembly 1 according to the invention is explained with reference to Fig. 1. Subsequently, the schematic structure of a quick-fit fastener 2 according to the invention is described with reference to Figs. 2 through 15.

The assembly 1 may be a multi-part construction element 3, for example from the field of automotive engineering. The assembly 1 includes a first construction part 4' and a second construction part 4". The construction parts 4', 4" and thus the entire construction element 3 may serve different purposes. For example, it may be a support structure for connections of a battery system or a vehicle interior trim. The division of the construction element 3 into the construction parts 4', 4" may be based on various reasons. For example, this may facilitate manufacturing, further processing, transport, and/or installation.

To mechanically connect the construction parts 4', 4", the assembly 1 includes the quick-fit fastener 2. The first construction part 4' may thus be mechanically connected to the second construction part 4" via the quick-fit fastener 2. For reasons of stability and redundancy, the assembly 1 may include multiple quick-fit fasteners 2, with which the construction parts 4', 4" may be connected. Likewise, the assembly may include more than two construction parts, each of which is connected in pairs via at least one quick-fit fastener 2.

As can be seen in Fig. 2, the quick-fit fastener 2 includes a first fastener component 6' and a second fastener component 6", wherein the first fastener component 6' is provided for arrangement at the first construction part 4' and the second fastener component 6" is provided for arrangement at the second construction part 4 ". Fig. 1 shows that the first fastener component 6' is located on the first construction part 4' and the second fastener component 6" is located on the second construction part 4".

The fastener components 6', 6" may each be manufactured as an injection-molded part 8. Alternatively, the fastener components 6', 6" may also be produced, for example, by 3D printing.

According to the embodiment shown in Fig. 1, the first fastener component 6' may be molded integrally with the first construction part 4'. Similarly, the second fastener component 6" may be molded integrally with the second construction part 4 ". In other words, the fastener components 6', 6" may form monolithic units 10 with the respective construction part 4', 4". Alternatively, the fastener components 6', 6" be glued, welded, or otherwise attached to the respective construction part 4', 4".

The first fastener component 6' may have a tab-like shape 12 at least in sections. In other words, the first fastener component 6' may essentially include a first base plate 14' that is plate-shaped and flat.

The second fastener component 6" may, in turn, have a channel shape 16 at least in sections, into which the tab shape 12 of the first fastener component 6' may be received. In particular, the second fastener component 6" may include a second base plate 14" and at least two side walls 18, wherein the second base plate 14" and the at least two side walls 18 together may define a receiving area 20 for the first fastener component 6' (see Fig. 3).

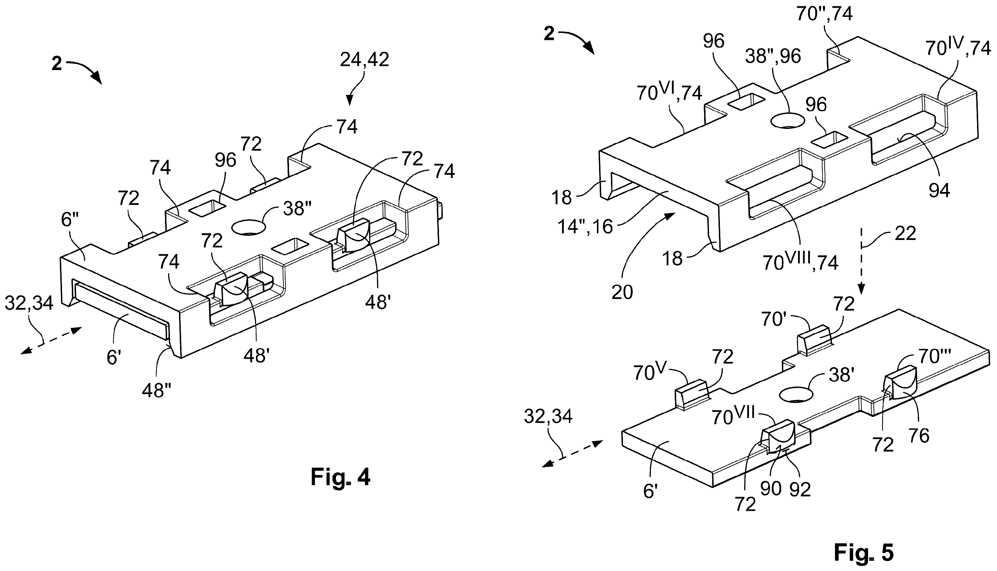

As is evident from a comparison of Figs. 4 and 5 and Figs. 7 and 8, respectively, the first fastener component 6' may be interconnected with the second fastener component 6" along a connection direction 22. In particular, this connection may be achieved by a linear movement. The first fastener component 6' and the second fastener component 6" are also configured to be latched with one another along the connection direction 22. Accordingly, the first fastener component 6' and the second fastener component 6" may be configured to be latched with one another in a linear manner along the connection direction 22. In particular, the fastener components 6', 6" may be brought into a latched state 24 with one another without any pivoting or tilting movement, during which the fastener components 6', 6" and thus also the construction parts 4', 4" would sweep over large volumes.

The quick-fit fastener 2 thus fulfils the function of a snap buckle 26 or snap clasp 28. In this context, the first fastener component 6' may be configured as a first buckle part 30' and the second fastener component 6" as a complementary second buckle part 30".

In the latched state 24, the first fastener component 6' and the second fastener component 6" may be configured to be displaceable relative to one another along a displacement direction 32. This mutual displaceability of the two fastener components 6', 6" is indicated in Fig. 4 by a double arrow 34 and allows for certain compensatory movements within the assembly 1 even after latching, so that any dimensional tolerances of the construction parts 4', 4" may be compensated for.

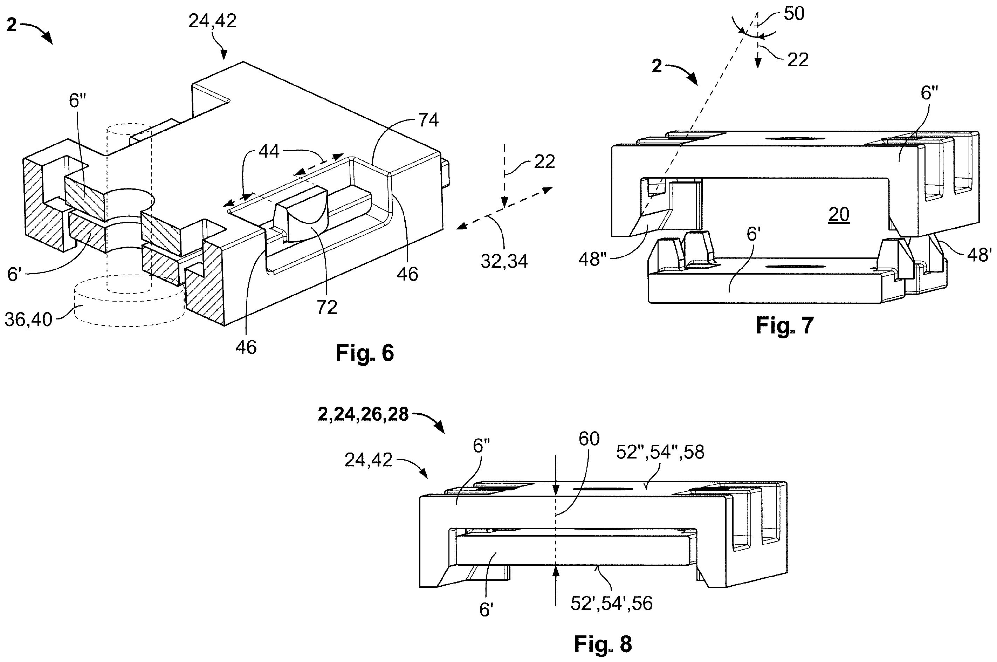

If necessary (for example, during transport of the assembly 1), the compensatory movements may be prevented by restricting the displacement of the two fastener components 6', 6". For this purpose, the quick-fit fastener 2 may include a centering pin 36 (see Fig. 6). In addition, the first fastener component 6' may include a first center hole 38' and the second fastener component 6" a second center hole 38". The center holes 38', 38" may have the same inner diameter and extend as a through-hole through the respective fastener components 6', 6". An outer diameter of the centering pin 36 corresponds precisely to the inner diameter of the center holes 38', 38".

Optionally, the first center hole 38' and the second center hole 38" are aligned transversely, in particular perpendicular to the displacement direction 32, in the latched state 24. Thus, the centering pin 36 may be inserted into the aligned center holes 38', 38" to prevent mutual displacement of the fastener components.

As soon as the displacement of the fastener components 6', 6" is required again, the centering pin 36 may be withdrawn from at least one center hole. To ensure it is always within reach, the centering pin 36 may be pivotally attached to the quick-fit fastener 2 via a film hinge (not shown). Alternatively, the centering pin 36 may be provided as a separate component 40 (see Fig. 6).

Optionally, the quick-fit fastener 2 may have a zero position 42, in which the fastener components 6', 6" may be displaced by the same distance 44 in both the displacement direction 32 and against it. In other words, the zero position 42 is equidistant from both endpoints 46 of the displacement. This zero position 42 may be identified by means of the center holes 38', 38". For this purpose, the center holes 38', 38" are arranged on the respective fastener components 6' , 6" such that the center holes 38', 38" are aligned perpendicular to the displacement direction 32 when the quick-fit fastener 2 is in its zero position 42. The quick-fit fastener 2 may then be secured in its zero position 42 using the centering pin 36.

As shown in Fig. 2, the first fastener component 6' may have a first insertion bevel 48' that runs obliquely to the connection direction 22. The second fastener component 6" may have a second insertion bevel 48" that runs obliquely to the connection direction 22 (Fig. 3). Optionally, the first insertion bevel 48' may be aligned parallel to the second insertion bevel 48" in the latched state 24. In particular, the insertion bevels 48', 48" may each be inclined by at most 60° relative to the connection direction 22.

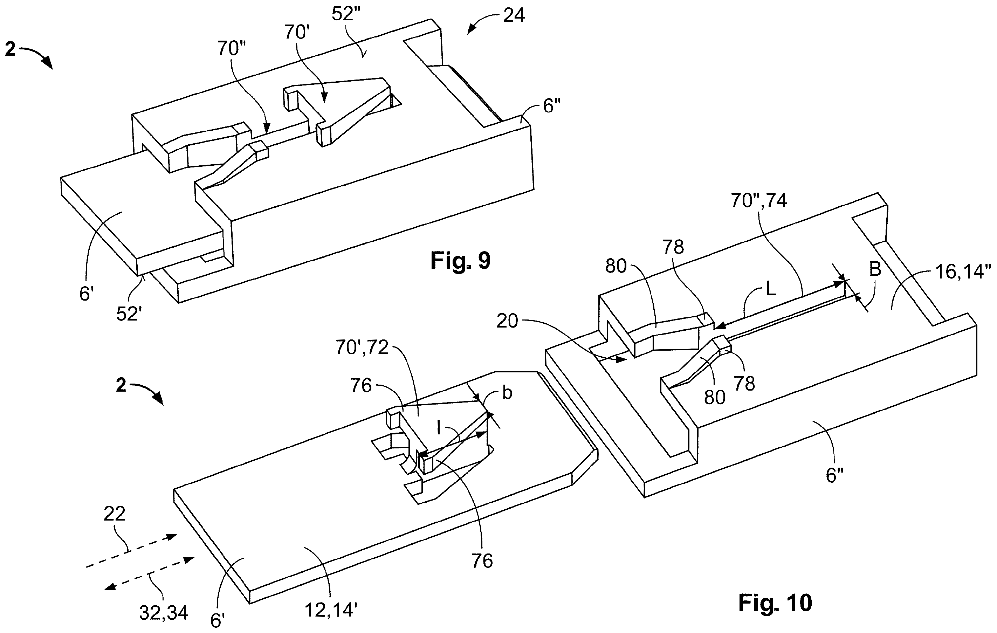

Depending on the application, the connection direction 22, along which the latching occurs, may be freely selected in the design of the quick-fit fastener 2. As shown in Figs. 4 and 5, the connection direction 22 may run transversely, in particular perpendicular to the displacement direction 32. In other words, the connection direction 22 and the displacement direction 32 may form an angle 50 of up to 90° with respect to one another (see Fig. 7). Alternatively, the connection direction 22 may run parallel to the displacement direction 32. This is the case in the embodiments of Figs. 9 through 13.

As shown in Fig. 8, the first fastener component 6' may have a first flat side 52' that, in the latched state 24, forms a first outer surface 54' of the quick-fit fastener 2. Additionally, the second fastener component 6" may have a second flat side 52" which, in the latched state 24, forms a second outer surface 54" of the quick-fit fastener 2 that faces away from the first outer surface 54'. Optionally, the flat sides 52', 52" are aligned parallel to one another in the latched state 24. The first outer surface 54' may constitute, for example, a bottom surface 56 of the quick-fit fastener 2, while the second outer surface may constitute a top surface 58 of the quick-fit fastener 2.

The displacement direction 32 may be coplanar with the flat surfaces 52' , 52". Thus, the quick-fit fastener 2 remains as flat as possible and occupies only a comparatively small height. For example, a distance 60 between the flat sides 52' , 52" does not exceed 3.5 mm. In the embodiments of Figs. 9 through 13, the connection direction 22 also runs coplanar with the flat sides 52', 52".

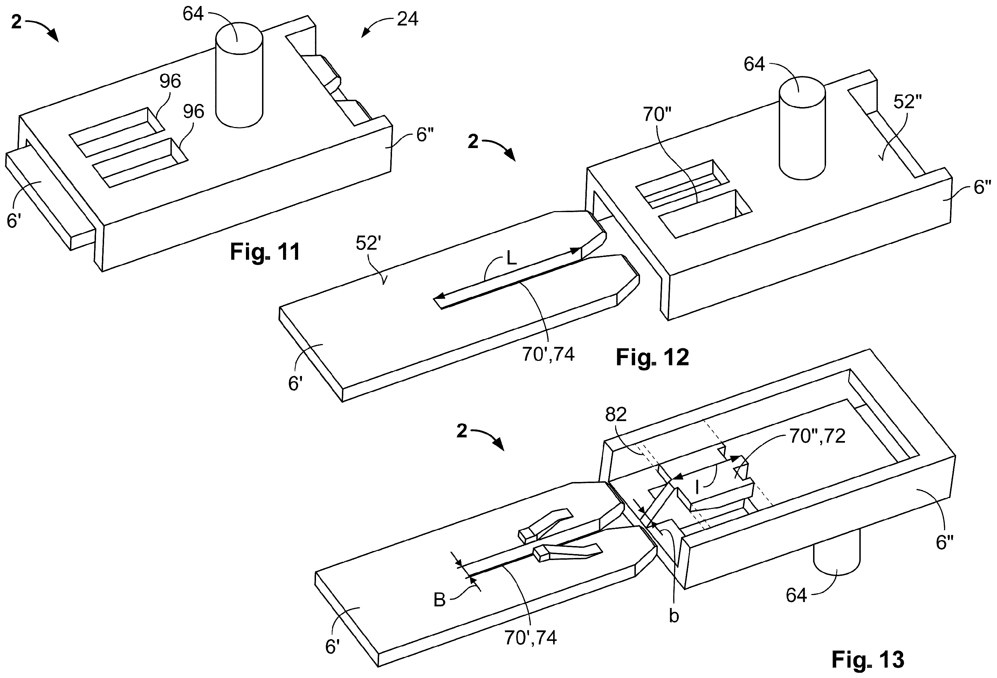

Fig. 1 illustrates that the assembly 1 may include an additional auxiliary part 62 in addition to the first construction part 4' and the second construction part 4". To efficiently utilize the installation space, the additional auxiliary part 62 may be positioned between the first and second construction parts 4', 4". In particular, it is then advantageous to attach the additional auxiliary part 62 to the quick-fit fastener 2. For this purpose, the quick-fit fastener 2 may include at least one caulking dome 64 that projects from the first flat side 52' or the second flat side 52" (see Figs. 11 to 13).

The at least one caulking dome 64 is configured to pass through a mounting opening 66 on the additional auxiliary part 62 and subsequently be plastically deformed under the influence of thermal and/or mechanical energy. In Fig. 1, the quick-fit fastener 2 is shown with two caulking domes 64, each of which passes through one of two mounting openings 66 of the auxiliary part 62, resulting in a rivet-like connection 68 .

Fig. 10 shows that the first fastener component 6' may include a first latching element 70' and the second fastener component 6" may include a second latching element 70" complementary to the first latching element 70'. Measured perpendicular to the displacement direction 32, the first latching element 70' and the second latching element 70" have substantially equal widths b, B. In contrast, the first latching element 70' and the second latching element 70" may have different lengths I, L when measured parallel to the displacement direction 32.

For example, the first latching element 70' may be configured as a latching arm 72, while the second latching element 70" may be configured as a latching receptacle 74 for the latching arm 72 (see Figs. 9 and 10). Conversely, the second latching element 70" may be configured as a latching arm 72, while the first latching element 70' may constitute the latching receptacle 74 (see Figs. 11-13).

Optionally, the latching arm 72 may have a latching projection 76 that extends transversely, particularly perpendicular to the connection direction 22. In the latched state 24, the latching projection 76 may engage in a form-fit manner with an undercut 78 in or on the latching receptacle 74. To ensure that the latching projection 76 engages the undercut 78 smoothly, a latching ramp 80 may lead to the undercut 78. The latching ramp 80 may form the first or second insertion bevel 48', 48".

To increase stability, the latching arm 72 may have two opposing latching projections 76, each of which rides onto a latching ramp 80 and engages in a form-fit with a respective undercut 78. Stability may be further increased if the latching projections 76 are connected to the aforementioned side walls 18. This is indicated in Fig. 13 by the dashed lines 82.

As an alternative or in addition to the opposing latching projections 76, multiple latching elements may be provided per fastener component 6', 6". For example, the first fastener component 6' may have a third latching element 70‴, while the second fastener component 6 may have a fourth latching element 70^{IV} that is complementary to the third latching element 70‴. In this case, the third latching element 70‴ complements the first latching element 70' of the first fastener component 6', and the fourth latching element 70^{IV} complements the second latching element 70" of the second fastener component 6". For example, the third latching element 70" may be positioned perpendicular to the displacement direction 32 opposite the first latching element 70' (see Fig. 5). Similarly, the fourth latching element 70^{IV} may be positioned perpendicular to the displacement direction 32 opposite the second latching element 70" (see Fig. 2).

Furthermore, the first fastener component 6' may include a fifth latching element 70^{V} that is aligned with the first latching element 70' in the displacement direction 32 (see Fig. 5). Accordingly, the second fastener component 6" may include a sixth latching element 70^{IV} that is complementary to the fifth latching element 70^{V} and is aligned with the second latching element 70" in the displacement direction 32 (see Fig. 2).

For reasons of symmetry, a seventh latching element 70^{VII} may be provided on the first fastener component 6', which is aligned with the third latching element 70‴ in the displacement direction 32 and is positioned opposite the fifth latching element 70^{V} perpendicular to the displacement direction 32. Similarly, an eighth latching element 70^{VIII} may be provided on the second fastener component 6", which is aligned with the fourth latching element 70^{IV} in the displacement direction 32 and is positioned opposite the sixth latching element 70 ^{VI} perpendicular to the displacement direction 32.

If the aforementioned caulking dome 64 is provided on the fastener component 6' or 6", it is optionally arranged on the opposite side of the latching element 70' or 70". This positioning of the caulking dome 64 ensures that the latching process is not impeded.

As illustrated in Fig. 6, the latching receptacle 74, measured parallel to the displacement direction 32, may extend longer, in particular at least twice as long, as the latching arm 72. This allows the latching arm 72 to move within the latching receptacle 74.

To protect the latching elements 70', 70" from excessive mechanical stress, the quick-fit fastener 2 may include several rigid and dimensionally stable stops 84. These stops 84 come into contact with one another before the latching elements 70', 70" collide. For example, the first fastener component 6' may include at least one first stop 84' spaced apart from the first latching element 70' (see Fig. 2). Similarly, the second fastener component 6" may include at least one second stop 84" spaced apart from the second latching element 70" (see Fig. 3). In the latched state 24, the stops 84 may align in pairs in the displacement direction 32. Furthermore, the stops 84 may define the endpoints 46 of the displacement mentioned above.

In the embodiment of Fig. 2, the stops 84 of the first fastener component 6' may be formed by one or more rectangular recesses 86 in the first base plate 14'. The stops 84 of the second fastener component 6", may be formed by one or more stop ribs 88, which project from the aforementioned side walls 18 and, in the latched state 24, engage into a respective recess 86.

Optionally, the first latching element 70' and/or the second latching element 70" may be rounded at least in sections. In particular, an outer surface 90 of the latching arm 72 may be provided with a rounding 92 (see Fig. 5). Similarly, an inner surface 94 of the latching receptacle 74 may be provided with a rounding (not shown). During latching, the smallest possible surfaces then slide against one another, thereby reducing frictional resistance and makes latching smoother.

Another way to make the latching smoother is to design the area surrounding the latching elements 70', 70" to be as flexible as possible. For this purpose, recesses 96 may be provided in the fastener components 6', 6". The recesses 96 may also result from the manufacturing process, for example in precision castings due to the shape of the casting mold. The center holes 38', 38" mentioned above may also serve as such recesses 96. As shown in Figs. 4 and 5, the recesses 96 may each be arranged between two adjacent latching elements of the same fastener component.

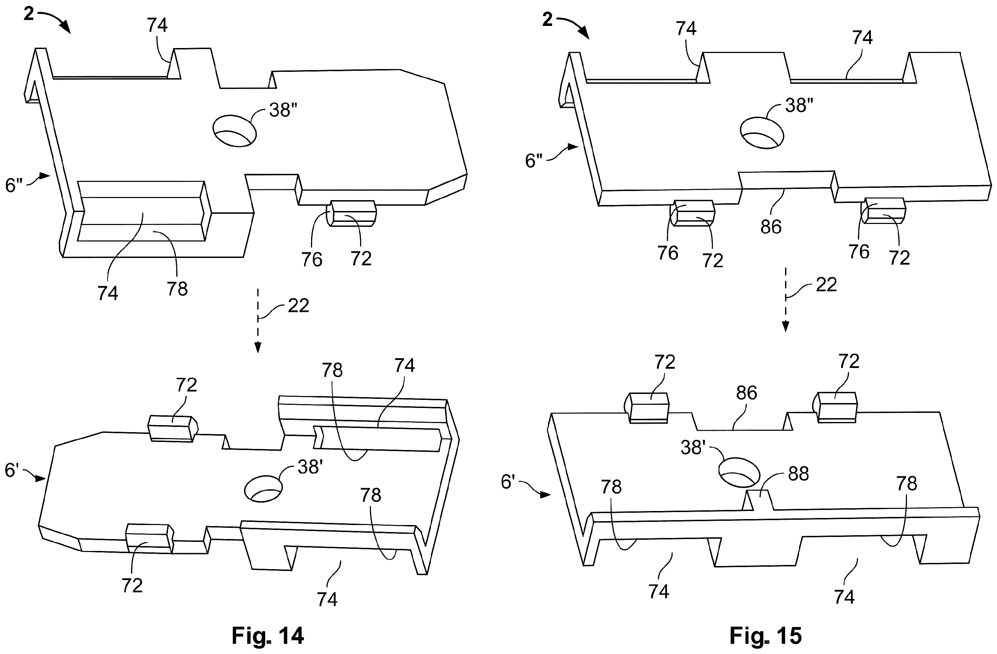

Figs. 14 and 15 depict hermaphroditic embodiments of the first fastener component 6' and the second fastener component 6". Essentially, the fastener components 6', 6" are structurally identical to one another, in particular having the same configuration. For this purpose, the first fastener component 6' may have at least one latching arm 72 and one latching receptacle 74, respectively, while the second fastener component 6" may also have at least one latching arm 72 and one latching receptacle 74, respectively. On the one hand, this simplifies manufacturing, as both fastener components 6', 6" may be produced using the same tool. For plastic injection-molded parts, for example, the same mold may be used for both fastener components 6', 6". Furthermore, no distinction needs to be made between the fastener components 6', 6", thereby reducing the effort required for storage and the provision of spare parts.

### REFERENCE NUMERALS

- 1: Assembly
- 2: Quick-fit fastener
- 3: Construction element
- 4', 4": Construction part
- 6`, 6": Fastener component
- 8: Injection-molded part
- 10: Monolithic unit
- 12: Tab shape
- 14', 14": Base plate
- 16: Channel shape
- 18: Side wall
- 20: Receiving area
- 22: Connection direction
- 24: State
- 26: Snap buckle
- 28: Snap clasp
- 30', 30": Buckle part
- 32: Displacement direction
- 34: Double arrow
- 36: Centering pin
- 38', 38": Center hole
- 40: Component
- 42: Zero position
- 44: Travel distance
- 46: End point
- 48', 48": Insertion bevel
- 50: Angle
- 52', 52": Flat side
- 54', 54": Outer side
- 56: Underside
- 58: Upper side
- 60: Distance
- 62: Auxiliary part
- 64: Caulking dome
- 66: Mounting opening
- 68: Rivet-like connection
- 70', 70", 70"', 70^{IV},70^{V},70^{VI},70^{VII},70^{VIII}: Latching element
- 72: Latching arm
- 74: Latching receptacle
- 76: Latching projection
- 78: Undercut
- 80: Latching ramp
- 82: dashed lines
- 84, 84', 84": Stop
- 86: Recess
- 88: Stop rib
- 90: Outer surface
- 92: Rounding
- 94: Inner surface
- 96: Recess
- b: Width
- B: Width
- I: Length
- L: Length

## Claims

1. Quick-fit fastener (2) for mechanically interconnecting two, mutually space apart construction parts, wherein the quick-fit fastener (2) comprises a first fastener component (6') and a second fastener component (6"), wherein
- the first fastener component (6') is provided for arrangement at a first construction part (4') of the two construction parts and
- the second fastener component (6") is provided for arrangement at a second construction part (4") of the two construction parts, wherein
the first fastener component (6') and the second fastener component (6") are configured mutually latchable along a connection direction (22).

2. Quick-fit fastener (2) according to claim 1, wherein the first fastener component (6') and the second fastener component (6") are relatively mutually displaceable along a displacement direction (32) in a latched state (24).

3. Quick-fit fastener (2) according to claim 2, wherein the first fastener component (6') comprises a first center hole (38') and the second fastener component (6") comprises a second center hole (38"), wherein the first center hole (38') and the second center hole (38") are aligned transversely to the displacement direction (32) in the latched state (24).

4. Quick-fit fastener (2) according to claims 2 or 3, wherein the first fastener component (6') comprises a first flat side (52'), which, in the latched state (24), forms a first outer side (54') of the quick-fit fastener (2), and wherein the second fastener component (6") comprises a second flat side (52"), which, in the latched state (24), forms a second outer surface (54") of the quick-fit fastener (2) that faces away from the first outer surface (54').

5. Quick-fit fastener (2) according to claim 4, wherein the quick-fit fastener (2) comprises at least one caulking dome (64) that projects from the first flat side (52') or the second flat side (52").

6. Quick-fit fastener (2) according to any one of claims 2 to 5, wherein the connection direction (22) runs parallel or transverse to the displacement direction (32).

7. Quick-fit fastener (2) according to any one of claims 2 to 6, wherein the first fastener component (6') comprises a first latching element (70') and the second fastener component (6") comprises a second latching element (70") that is at least partially complementary to the first latching element (70'), wherein the first latching element (70') and the second latching element (70") have substantially equal widths (b, B) measured perpendicular to the displacement direction (32), and wherein the first latching element (70') and the second latching element (70") have different lengths (I, L) measured parallel to the displacement direction (32).

8. Quick-fit fastener (2) according to claim 7, wherein the first latching element (70') is configured as a latching arm (72), wherein the second latching element (70") is configured as a latching receptacle (74) for the latching arm (72), and wherein the latching receptacle (74), measured parallel to the displacement direction (32), is at least twice as long as the latching arm (72).

9. Quick-fit fastener (2) according to claims 7 or 8, wherein the first latching element (70') and/or the second latching element (70") are rounded at least in sections.

10. Quick-fit fastener (2) according to any one of claims 7 to 9, wherein the first fastener component (6') comprises at least one first stop (84') spaced apart from the first latching element (70'), wherein the second fastener component (6") comprises at least one second stop (84") spaced apart from the second latching element (70"), and wherein, in the latched state (24), the at least one first stop (84') and the at least one second stop (84") are aligned in the displacement direction (32).

11. Quick-fit fastener (2) according to any one of claims 7 to 10, wherein the first fastener component (6') comprises a third latching element (70‴) that is positioned perpendicular to the displacement direction (32) opposite the first latching element (70'), and wherein the second fastener component (6") comprises a fourth latching element (70^{IV}) complementary to the third latching element (70‴), which is positioned opposite the second latching element (70") perpendicular to the displacement direction (32).

12. Quick-fit fastener (2) according to any one of claims 7 to 11, wherein the first fastener component (6') comprises a fifth latching element (70^{V}) that is aligned with the first latching element (70') in the displacement direction (32), and wherein the second fastener component (6") comprises a sixth latching element (70^{VI}) complementary to the fifth latching element (70^{V}), which is aligned with the second latching element (70") in the displacement direction (32).

13. Quick-fit fastener (2) according to any one of claims 1 to 12, wherein the first fastener component (6') comprises a first insertion bevel (48') extending obliquely to the connection direction (22) and/or the second fastener component (6") comprises a second insertion bevel (48") extending obliquely to the connection direction (22).

14. Quick-fit fastener (2) according to any one of claims 1 to 13, wherein the first fastener component (6') and the second fastener component (6") are configured to be structurally identical to one another.

15. Assembly (1) comprising a quick-fit fastener (2) according to any one of claims 1 to 14, a first construction part (4'), and a second construction part (4") spaced apart from the first construction part (4'), wherein the first fastener component (6') is located on the first construction part (4') and the second fastener component (6") is located on the second construction part (4"), and wherein the first construction part (4') is mechanically interconnectable to the second construction part (4") via the quick-fit fastener (2).
